# EUROPEAN PATENT APPLICATION

(11) **EP 4 844 698 A1**
(43) Date of publication of application: **25.11.2026**
(21) Application number: 25305722.8
(22) Date of filing: 20.05.2025
(51) Int. Cl.: G06V 10/774, G06V 10/82, G06V 40/16

(54) **SYSTEM AND METHOD FOR SIMULATING REALISTIC DEGRADED IMAGES**

(71) Applicant: THALES DIS FRANCE SAS, 92190 Meudon (FR)
(72) Inventor: RKHAMI, Anouar, 92300 Levallois-Perret (FR); LANNES, Sarah, 91400 Orsay (FR)
(74) Representative: Quintero Romero, Manuel

(57) **Abstract**

A system (102) for simulating realistic degraded images. The system (102) is configured to receive an input degraded image (402) and a high-quality target image (404) to be simulated into a realistic degraded image (408), create an enhanced version of the received input degraded image (402), analyse the enhanced version of the degraded image (406) and the input degraded image (402) to generate a degradation vector pertaining to one or more degradation characteristics associated with the input degraded image (402), and encompasses an overall degradation in the input degraded image (402), extract an acquisition condition associated with the input degraded image (402), and generate the simulated realistic degraded image (408) of the high-quality target image (404) based on the generated degradation vector and the extracted acquisition conditions.

## Description

### TECHNICAL FIELD

The present disclosure relates to the field of biometrics or facial recognition. More specifically, the present disclosure provides a system and method for simulating realistic degraded images.

### BACKGROUND OF THE INVENTION

Face recognition (FR) technology has transformed numerous domains, including security systems, consumer electronics, and identity verification processes. Its widespread adoption is driven by its potential for accurate and efficient identification and authentication. However, the reliability and accuracy of FR algorithms are heavily influenced by several factors, including variations in illumination, occlusions, noise, acquisition conditions, and the characteristics of the sensors (cameras) used to capture face images. These factors introduce degradations that often result in suboptimal algorithm performance in real-world scenarios.

To ensure robustness and reliability in practical applications, it is important to develop methods that simulate these degradations and image acquisition conditions effectively. By generating face images that reflect real-world degradations and acquisition conditions, FR algorithms may be trained and tested to handle diverse scenarios, enhancing their ability to deliver consistent performance under variable conditions. Realistic simulations of degraded images allow FR methods to remain functional in challenging environments where image quality is far from ideal.

Existing solutions for simulating image degradations often rely on predefined models or lists of interactions between known degradation factors. While these approaches provide a foundation for analyzing degradation effects, they are inherently complex, requiring expert knowledge to identify the presence and contribution of each degradation factor. Furthermore, such methods may fail to capture the intricate and cumulative interactions between multiple degradation factors. For instance, lighting changes may amplify noise effects or introduce shadows that obscure critical facial features, making it difficult to replicate real-world degradations accurately.

Style transfer (ST) solutions have also been in use as an automated approach to simulate degradations by altering the visual appearance of images while preserving their content. However, ST-based methods fall short of addressing the realism required for FR applications. These techniques often introduce artifacts or distortions, resulting in unnatural or unrealistic appearances. Moreover, ST solutions are primarily designed for artistic and stylistic variations, which limits their ability to accurately replicate the diverse range of real-world degradation factors encountered during face image acquisition.

Therefore, there is a need for a method and system that addresses the above-mentioned technical problems by providing a solution that accurately captures the impact of degradation factors on key facial features, transferring acquisition conditions, and avoiding constraints or assumptions about the types of degradations or capture scenarios.

### SUMMARY OF THE INVENTION

The present invention provides a solution for all the aforementioned problems by a system for simulating realistic degraded images according to claim 1, and a corresponding method for simulating realistic degraded images according to claim 10. In dependent claims, preferred embodiments of the invention are defined.

In a first inventive aspect, the invention provides a system for simulating realistic degraded images. The system comprises one or more processors coupled with at least one memory, wherein said at least one memory stores instructions which when executed by the one or more processors cause the system to perform one or more designated operations. The system is configured to receive an input degraded image and a high-quality target image to be simulated into a realistic degraded image, create, using a first learning module, an enhanced version of the received input degraded image, analyze, using a second learning module, the enhanced version of the degraded image and the input degraded image to generate a degradation vector, where the degradation vector corresponds to one or more degradation characteristics associated with the input degraded image and encompasses an overall degradation in the input degraded image, extract, using a third learning module, an acquisition condition associated with the input degraded image, and generate the simulated realistic degraded image of the high-quality target image based on the generated degradation vector and the extracted acquisition condition.

According to some example embodiments, the system is configured to apply the vector to the target image to simulate degradation and correspondingly create a partially degraded image, and extract and transfer, using the third learning module, the extracted acquisition condition from the input degraded image to the partially degraded image to generate the simulated realistic degraded image of the high-quality target image.

According to some example embodiments, the input degraded image corresponds to an image of a face associated with one or more entities

According to some example embodiments, the first learning module is a face quality enhancement (FQE) module that is configured to enhance facial features of the input degraded image by suppressing noise and restoring clarity in the input degraded image to create the enhanced version of the input degraded image.

According to some example embodiments, the second learning module is a degradation representation learning module (DRLM) that is configured to analyze the enhanced version of the degraded image and the input degraded image to generate the degradation vector that encode the one or more degradation characteristics of the input degraded image.

According to some example embodiments, the DRLM is configured to generate the degradation vector independent of content associated with the input degraded image.

According to some example embodiments, the third learning module is a realistic face transfer (RFT) module that is configured to transfer the extracted acquisition condition from the input degraded image to the partially degraded image.

According to some example embodiments, the one or more degradation characteristics comprises one or more of: noise pattern, blur, motion blur, textural inconsistencies, occlusions, distortions, resolution changes, illumination variations, color shifts, and contrast issues.

According to some example embodiments, the acquisition condition comprises one or more of: lighting condition, exposure settings, camera sensor type, camera angle, focal length, depth of field, white balance settings, aperture settings, shutter speed, iso sensitivity, and environmental factors such as shadows, reflections, rain, fog, or glare.

In a second inventive aspect, the present invention provides a method for simulating realistic degraded images. The method comprises the steps of receiving, by a system, an input degraded image and a high-quality target image to be simulated into a realistic degraded image, creating, by the system, using a first learning module, an enhanced version of the received input degraded image, analyzing, by the system, using a second learning module, the enhanced version of the degraded image and the input degraded image to generate a degradation vector, where the degradation vector pertain to one or more degradation characteristics associated with the input degraded image and encompasses an overall degradation in the input degraded image, extracting, by the system, using a third learning module, an acquisition condition associated with the input degraded image, and generating, by the system, the simulated realistic degraded image of the high-quality target image based on the generated degradation vector and the extracted acquisition condition.

According to some example embodiments, the first learning module is a face quality enhancement (FQE) module. The method comprises the steps of enhancing, by the FQE module, facial features of the input degraded image by suppressing noise and restoring clarity in the input degraded image to create the enhanced version of the input degraded image.

According to some example embodiments, the second learning module is a degradation representation learning module (DRLM). The method comprises the steps of analyzing, by the DRLM, the enhanced version of the degraded image and the input degraded image to generate the degradation vector that encode the one or more degradation characteristics of the input degraded image.

According to some example embodiments, the method comprises the steps of generating the degradation vector independent of content associated with the input degraded image.

According to some example embodiments, the third learning module is a realistic face transfer (RFT) module. The method comprises the steps of transferring, by the **RFT** module, the extracted acquisition condition from the input degraded image to the partially degraded image.

All the features described in this specification (including the claims, description and drawings) and/or all the steps of the described method can be combined in any combination, with the exception of combinations of such mutually exclusive features and/or steps.

### DEFINITIONS

The term "degraded image" refers to an image that has experienced a reduction in quality due to various factors such as distortion, loss of detail, or a decrease in resolution. This degradation can be caused by compression, noise, artifacts, poor acquisition conditions (e.g., low light or camera limitations), or transmission errors. The resulting image appears blurred, pixelated, or lacking in clarity and sharpness compared to the original or intended representation. Image degradation can also occur through processes like scaling, filtering, or processing steps that remove or alter key image data.

The term "high-quality image" refers to an image that maintains a high level of clarity, detail, and accuracy, with minimal distortion or noise. It typically has a high resolution, with well-defined edges, vibrant colors, and sharp features. High-quality images are free from artifacts, compression losses, or blurring, and they retain their intended visual integrity across various viewing conditions and sizes.

The term "enhanced degraded image" refers to an image that, while initially degraded due to factors like noise, low resolution, or distortion, has undergone processing or manipulation to improve its quality. This enhancement typically involves the application of techniques such as noise reduction, sharpening, contrast adjustment, or resolution upscaling to restore or improve key features of the image.

The term "Simulated" refers to the process of creating a representation or imitation of a real-world process, system, or condition, often through artificial means or using models and algorithms.

The term "simulated realistic degraded image" refers to an image that has been artificially created or modified to replicate the characteristics of a degraded image, typically reflecting real-world distortions or quality loss.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
FIG. 1 illustrates a block diagram of an environment of a system for simulating realistic degraded images, in accordance with an example embodiment;
FIG. 2 illustrates a block diagram of a system architecture for simulating realistic degraded images, in accordance with an example embodiment;
FIG. 3 illustrates a flow diagram of a method for simulating realistic degraded images, in accordance with an example embodiment;
FIG. 4 illustrates various stages associated with the process of simulating realistic degraded images, in accordance with an example embodiment;
FIG. 5A illustrates a first stage of the process of FIG. 4, where an enhanced version of the degraded image is created, in accordance with an example embodiment; and
FIG. 5B illustrates a second stage of the process of FIG. 4, where the image acquisition condition information is transferred from the degraded image to the image obtained in the first stage, in accordance with an example embodiment.

### DETAILED DESCRIPTION OF THE INVENTION

The system and method for generating realistic degraded images is disclosed. The present disclosure offers a fully automated solution for generating synthetic images degraded with real-world conditions. By simply providing a real-degraded image and a high-quality (HQ) image, the solution produces a degraded version of the HQ image as though it were captured under the same conditions as the original degraded image. Unlike existing methods, the present disclosure provides a solution that successfully handles both the degradation and conditions transfer. This eliminates the need to search for the same camera used in the original capture, even if it is an obsolete model.

Additionally, the system and method remove the necessity for expert intervention to identify the specific degradations in the image, making the process more efficient and accessible. This solution not only saves time and financial costs but also has significant applications in the field of face recognition. This solution can generate real-degraded images that serve to augment training data for various face recognition algorithms, including detection and feature extraction. By simulating realistic degradations and capture conditions, the solution ensures that these algorithms are exposed to a diverse set of data, improving their robustness and accuracy. This makes the solution a valuable tool across the entire face recognition chain, enabling the development of more reliable and effective systems.

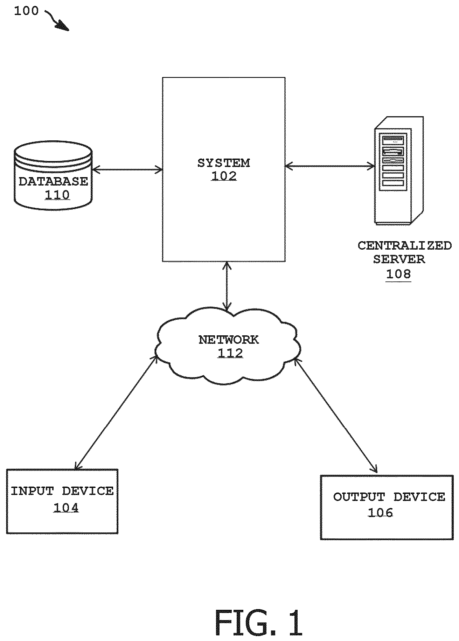

Embodiments of the present disclosure may provide a method and a system for simulating realistic degraded images. The method and the system for such simulation are described with reference to FIG. 1 to FIG. 5B as detailed below.

**FIG. 1** illustrates a block diagram 100 of an environment of a system 102 for simulating realistic degraded images, in accordance with an example embodiment. The system 102 may be communicatively coupled with the at least one input device 104, at least one output device 106, a centralized server 108, and a database 110 via a communication network 112. Examples of the input device 104 may comprise, but are not limited to, a camera, a scanner device, desktop, a laptop, a notebook, a tablet, a smartphone, a mobile phone, an application server, or the like. Further, examples of the output device 106 may comprise, but are not limited to, a display device, a printer, a projector, a desktop, a laptop, a notebook, a tablet, a smartphone, a mobile phone, an application server, or the like. The input device and the output device are associated with at least one user (collectively referred to as user, hereinafter). The centralized server 108 acts as the core management point for provisioning, authenticating, and controlling access for the input device 104 and the output device 106 to the system 102. The centralized server 108 ensures seamless communication between the system 102, the input device 104, and the output device 108 via the network 112 by coordinating secured data exchange therebetween.

The communication network 112 may be wired, wireless, or any combination of wired and wireless communication networks, such as cellular, Wi-Fi, internet, local area networks, or the like. In one embodiment, the communication network 112 may comprise one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fibre-optic network, and the like, or any combination thereof. In addition, the wireless network may be, for example, a cellular network and may employ various technologies comprising enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

In one example embodiment, the system 102 is configured to receive an input degraded image and a high-quality target image to be simulated into a realistic degraded image from the input device 104. The users may capture and/or enter the corresponding images into the system 102 using the input device 104 upon validation of the users. In one example, the input degraded image corresponds to an image of a face associated with one or more entities/users, which may be captured under unknown degradation factors and acquisition conditions.

The system 102 is configured to create, using a first learning module, an enhanced version of the received input degraded image and further analyze, using a second learning module, the enhanced version of the degraded image and the input degraded image to generate a degradation vector. The degradation vector may pertain to one or more degradation characteristics associated with the input degraded image. The degradation vector represents an overall degradation process derived from the input degraded image, where the overall degradation process encompasses interactions between multiple degradation characteristics. Further, the system 102 is configured to extract, using a third learning module, an acquisition condition associated with the input degraded image initially received via the input device 104 and correspondingly generate the simulated realistic degraded image of the high-quality target image based on the generated degradation vector and the extracted acquisition condition. Finally, the generated simulated realistic degraded image of the high-quality target image can be transmitted to or displayed on the output device 106.

In one example embodiment, the system 102 is configured to apply the vector to the target image to simulate degradation and correspondingly create a partially degraded image. Further, the system 102 is configured to and extract and transfer, using the third learning module, the extracted acquisition condition from the input degraded image to the partially degraded image to generate the simulated realistic degraded image of the high-quality target image.

In one example embodiment, one or more input degraded images and one or more high-quality target images to be simulated into a realistic degraded image may be received by or entered into the system 102 using the input device 104 and further stored in the database 110. Further, the final generated simulated realistic degraded image of the high-quality target image may also be stored in the database 110.

In one example embodiment, the first learning module is a face quality enhancement (FQE) module that is configured to enhance facial features of the input degraded image by suppressing noise and restoring clarity in the input degraded image to create the enhanced version of the input degraded image.

Further, in one example embodiment, the second learning module is a degradation representation learning module (DRLM) that is configured to analyze the enhanced version of the degraded image and the input degraded image to generate the vector that encode the one or more degradation characteristics of the input degraded image. In one example embodiment, the DRLM is configured to generate the degradation vector independent of content associated with the input degraded image.

Furthermore, in one example embodiment, the third learning module is a realistic face transfer (RFT) module that is configured to transfer the extracted acquisition condition from the input degraded image to the partially degraded image. Accordingly, system 102 uses the transferred extracted acquisition condition from the input degraded image to the partially degraded image to generate the simulated realistic degraded image of the high-quality target image.

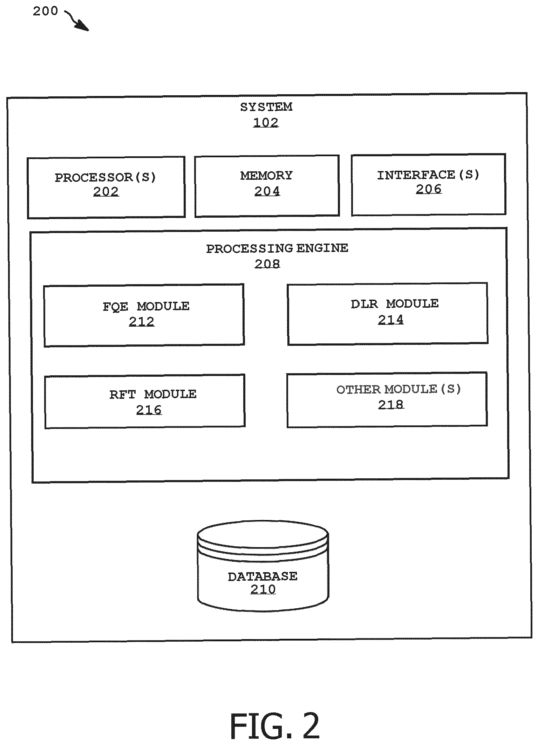

The system 102 may comprise a processor 202 and a memory 204 as shown in FIG. 2. The term "memory" used herein may refer to any computer-readable storage medium, for example, volatile memory, random access memory (RAM), non-volatile memory, read only memory (ROM), or flash memory. The memory 204 may comprise a Random-Access Memory (RAM), a Read-Only Memory (ROM), a Complementary Metal Oxide Semiconductor Memory (CMOS), a magnetic surface memory, a Hard Disk Drive (HDD), a floppy disk, a magnetic tape, a disc (CD-ROM, DVD-ROM, etc.), a USB Flash Drive (UFD), or the like, or any combination thereof.

The term "processor" used herein may refer to a hardware processor comprising a Central Processing Unit (CPU), an Application-Specific Integrated Circuit (ASIC), an Application-Specific Instruction-Set Processor (ASIP), a Graphics Processing Unit (GPU), a Physics Processing Unit (PPU), a Digital Signal Processor (DSP), a Field Programmable Gate Array (FPGA), a Programmable Logic Device (PLD), a Controller, a Microcontroller unit, a Processor, a Microprocessor, an ARM, or the like, or any combination thereof.

The processor 202 may retrieve computer program code instructions that may be stored in the memory for execution of the computer program code instructions. The processor may be embodied in a number of different ways. For example, the processor 202 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may comprise one or more processing cores configured to perform independently. A multicore processor may enable multiprocessing within a single physical package. Additionally, or alternatively, the processor 202 may comprise one or more processors configured in tandem via the bus to enable independent execution of instructions, pipelining, and/or multithreading.

Additionally, or alternatively, the processor 202 may comprise one or more processors capable of processing large volumes of workloads and operations to provide support for big data analysis. In an example embodiment, the processor 202 may be in communication with the memory 204 via a bus for passing information among components of the system.

The memory 204 may be non-transitory and may comprise, for example, one or more volatile and/or non-volatile memories. In other words, for example, the memory 304 may be an electronic storage device (for example, a computer readable storage medium) comprising gates configured to store data (for example, bits) that may be retrievable by a machine (for example, a computing device like the processor). The memory 204 may be configured to store information, data, contents, applications, instructions, or the like, for enabling the apparatus to carry out various functions in accordance with an example embodiment of the present disclosure. For example, the memory 204 may be configured to buffer input data for processing by the processor 202.

The memory 204 may store instructions that, when executed by the processor 202, cause the system 102 to perform one or more operations of the present disclosure which will be described in greater detail in conjunction with FIG. 2.

The input device 104 and the output device 106 may comprise various hardware and software tools that may be integrated with the system 102 to enhance its functionality. The complete process followed by the system 102 is explained in detail in conjunction with FIG. 2 to FIG. 5B.

**FIG. 2** illustrates a block diagram 200 illustrating various modules within the system 102 for simulating realistic degraded images, in accordance with an example embodiment. The system 102 comprises one or more processor(s) 202. The one or more processor(s) 202 are implemented as one or more microprocessors, microcomputers, microcontrollers, digital signal processors, central processing units, logic circuitries, and/or any devices that manipulate data based on operational instructions. Among other capabilities, one or more processor(s) 202 are configured to fetch and execute computer-readable instructions stored in a memory of the sink device. The memory 204 stores one or more computer-readable instructions or routines, which are fetched and executed to create or share the data units over a network service. Memory 204 comprises any non-transitory storage device comprising, for example, volatile memory such as RAM, or non-volatile memory such as EPROM, flash memory, and the like.

In an embodiment, the system 102 also comprises an interface(s) 206. The interface(s) 206 comprises a variety of interfaces, for example, interfaces for data input and output devices referred to as I/O devices, storage devices, and the like. The interface(s) 206 facilitates communication of the system 102 with various devices or servers coupled to the system 102. The interface(s) 206 also provides a communication pathway for one or more components of the system 102. Examples of such components comprise, but are not limited to, processing engine(s) and database. Interface 206 comprises a platform for communication with the devices/servers to read real-time data /write data in the system 102 and to communicate with the other devices. Interfaces 206 comprise a Graphical interface that allows user to feed inputs, to type/write/ upload the data and certificates, and other software and hardware interfaces, for example, interfaces for peripheral device(s), such as a keyboard, a mouse, an external memory, and a printer.

In an embodiment, the processing engine(s) 208 are implemented as a combination of hardware and programming (for example, programmable instructions) to implement one or more functionalities of the processing engine(s) 208. In the examples described herein, such combinations of hardware and programming may be implemented in several different ways. For example, the programming for the processing engine(s) 208 are processor-executable instructions stored on a non-transitory machine-readable storage medium, and the hardware for the processing engine(s) comprises a processing resource (for example, one or more processors), to execute such instructions. In the present examples, the machine-readable storage medium stores instructions that, when executed by the processing resource, implement the processing engine(s). In such examples, the system 102 comprises the machine-readable storage medium storing the instructions and the processing resource to execute the instructions, or the machine-readable storage medium may be separate but accessible to the user device and the processing resource. In other examples, the processing engine(s) 208 is implemented by electronic circuitry. Database 210 comprises data that is either stored or generated as a result of functionalities implemented by any of the components of the processing engine(s) 208.

In an exemplary embodiment, the processing engine 208 may comprise one or more engines selected from any of a face quality enhancement (FQE) module 212, degradation representation learning module (DRLM) 214, a realistic face transfer (RFT) module 216, and other modules 218 having functions that may comprise but are not limited to testing, storage, and peripheral functions, such as wireless communication unit for remote operation, audio unit for alerts and the like.

The FQE module or first learning module 212 enables the system 102 to enhance facial features of the input degraded image by suppressing noise and restoring clarity in the input degraded image to create the enhanced version of the input degraded image

The DLRM or second learning module 214 enables the system 102 to analyze the enhanced version of the degraded image and the input degraded image to generate the degradation vector that encode the one or more degradation characteristics of the input degraded image. The DRLM may be configured to generate the degradation vector independent of content associated with the input degraded image.

In one example embodiment, the one or more degradation characteristics comprises one or more of: noise pattern, blur, motion blur, textural inconsistencies, occlusions, distortions, resolution changes, illumination variations, color shifts, and contrast issues, but is not limited to the like.

The system 102 then applies the degradation vector to the target image to simulate degradation and correspondingly create a partially degraded image.

Further, the RFT module or third learning module 216 enables the system 102 to extract an acquisition condition associated with the input degraded image and transfer the extracted acquisition condition from the input degraded image to the partially degraded image. In one example embodiment, the acquisition condition comprises one or more of: lighting condition, exposure settings, camera sensor type, camera angle, focal length, depth of field, white balance settings, aperture settings, shutter speed, iso sensitivity, and environmental factors such as shadows, reflections, fog, rain, or glare, but is not limited to the like.

Accordingly, the system 102 uses the extracted acquisition condition from the input degraded image to generate the simulated realistic degraded image of the high-quality target image from the partially degraded image.

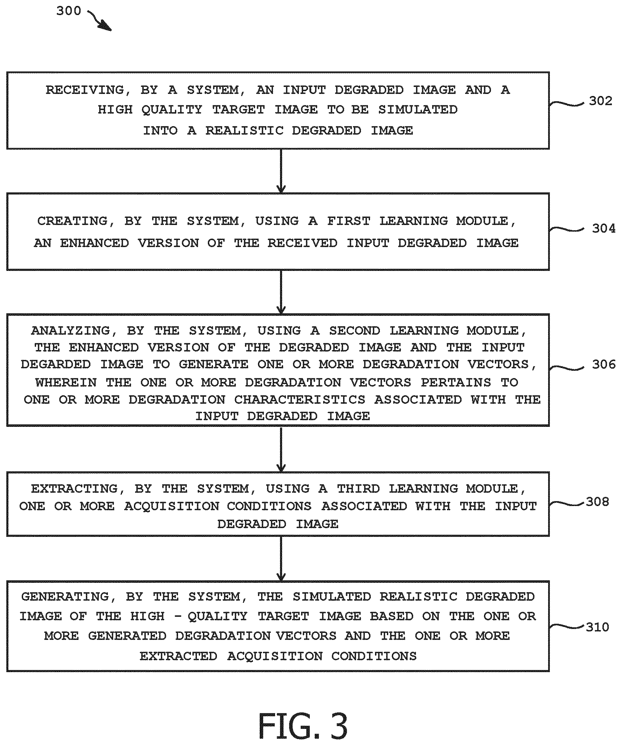

**FIG. 3** illustrates a flow diagram 300 of the method for simulating realistic degraded images, in accordance with an example embodiment. It will be understood that each block of the flow diagram of the method 300 may be implemented by various means, such as hardware, firmware, processor, circuitry, and/or other communication devices associated with execution of software comprising one or more computer program instructions. For example, one or more of the procedures described above may be embodied by computer program instructions. In this regard, the computer program instructions which embody the procedures described above may be stored by a memory 204 of the system 102, employing an embodiment of the present disclosure and executed by a processor 202 of the system 102.

As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks. Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions

The method 300 is implemented by the system architecture 200. At step 302, method 300 comprises the steps of receiving, by the system 102, via the input device 104, an input degraded image and a high-quality target image to be simulated into a realistic degraded image. The users may capture and/or enter the corresponding images into the system 102 using the input device 104 upon validation of the users. In one example, the input degraded image corresponds to an image of a face associated with one or more entities/users, which may be captured under unknown degradation factors and acquisition conditions.

At step 304, method 300 further comprises the steps of creating, by the system 102, using a first learning module. The first learning module may comprise face quality module and the like. The face quality enhancement (FQE) module is an enhanced version of the input degraded image received at step 302. In one example embodiment, at step 304, method 300 comprises the steps of enhancing, by the FQE module, facial features of the input degraded image by suppressing noise and restoring clarity in the input degraded image to create the enhanced version of the input degraded image.

At step 306, method 300 comprises the steps of analyzing, by the system, using a second learning module or degradation representation learning module (DRLM), the enhanced version of the degraded image of step 304 and the input degraded image of step 302 to generate a degradation vector, where the degradation vector pertains to one or more degradation characteristics associated with the input degraded image and encompasses an overall degradation in the input degraded image. In one example embodiment, at step 306, the method 300 comprises the steps of analyzing, by the DRLM, the enhanced version of the degraded image of step 34 and the input degraded image of step 302 to generate the degradation vector that encode the one or more degradation characteristics of the input degraded image. Further, the generated vector may be independent of content associated with the input degraded image.

At step 308, method 300 comprises the steps of extracting, by the system, using a third learning module, an acquisition condition associated with the input degraded image received at step 302.

Further, at step 310, method comprises the steps of generating, by the system, the simulated realistic degraded image of the high-quality target image received at step 302 based on the generated degradation vector generated at 306 and the extracted acquisition condition extracted at step 308.

In one example embodiment, at step 308 and 310, the method 300 comprises the steps of applying the degradation vector of step 306 to the target image of step 302 to simulate degradation and correspondingly create a partially degraded image. Further, method comprises the steps of extracting and transferring, using the third learning module or RFT module, the extracted acquisition condition at step 308 to the partially degraded image for generating the simulated realistic degraded image of the high-quality target image.

In one example embodiment, at step 310, the method 300 comprises the steps of transferring, by the RFT module, the extracted acquisition condition from the input degraded image to the partially degraded image, and further enabling generation of the simulated realistic degraded image of the high-quality target image based on the generated degradation vector and the extracted acquisition condition.

As will be appreciated by those skilled in the art, the techniques described in the various embodiments discussed above are not routine, or conventional, or well understood in the art. The techniques discussed above provide for innovative solutions to address the challenges associated with generating holistic responses based on structural and semantic queries. The disclosed techniques offer several advantages over the existing methods as listed in below paragraphs.

Referring back to FIG. 2, in one example embodiment, the Face Quality Enhancement (FQE) module 212 is a specialized machine learning model designed to improve the quality of facial images, particularly in applications where clarity and precision are crucial, such as face recognition systems. The primary function of the FQE module 212 is to process low-quality or degraded facial images, enhancing features such as resolution, sharpness, and overall visual quality. FQE module 212 utilizes advanced algorithms, such as deep learning-based enhancement techniques and image restoration models, to recover and highlight important facial details that might have been obscured due to factors like low lighting, motion blur, or compression artifacts.

The FQE module 212 integrates a multi-step processing pipeline. Initially, it analyzes the input image for common degradation patterns, such as noise, distortion, or low contrast, and applies a set of pre-trained neural networks or traditional image processing techniques to counteract these issues. The FQE module 212 works by enhancing facial features such as eyes, lips, and nose, using sophisticated methods like super-resolution to upscale the image while preserving natural facial contours. Furthermore, the FQE module 212 detects and mitigates issues like occlusion or partial facial views, which can degrade recognition accuracy in real-world scenarios.

One of the aspects of the FQE module 212 is its ability to perform dynamic adjustments based on the specific degradation patterns of the input image. By employing adaptive filtering and pixel-level restoration, the module ensures that the enhancement process does not introduce artifacts or over-enhance details, which may distort the facial features. FQE module 212 also takes into account factors like age, lighting conditions, and pose variations, allowing the system 102 to maintain the authenticity and naturalness of the facial image after enhancement.

In one example embodiment, the Degradation Representation Learning Module (DRLM) 214 is an advanced machine learning model designed to model and learn the underlying degradation patterns in images, specifically in the context of facial images. Its primary function is to identify and capture various degradation factors that affect image quality, such as noise, blur, compression artifacts, low resolution, and lighting inconsistencies. By learning these degradation patterns, the DRLM 214 can create a representation that accurately reflects the conditions under which the image was captured, enabling better restoration or enhancement of the degraded image.

The DRLM 214 employs deep learning techniques, typically using convolutional neural networks (CNNs) or generative adversarial networks (GANs), along with diffusion models and vision transformers (ViTs), to automatically learn the characteristics of image degradation from large datasets. It works by training on pairs of high-quality and degraded images, allowing the model to map the relationship between the original image and its degraded counterpart. This learned degradation representation can then be used to generate synthetic degraded images that closely mimic real-world distortions, helping systems simulate various degradation scenarios for testing or training purposes. CNNs are widely used for image-related tasks such as classification, object detection, and segmentation due to their ability to automatically learn spatial hierarchies of features through convolutional layers. CNNs leverage filters to extract features like edges, textures, and patterns, making them highly effective for visual data. On the other hand, GANs comprises of two neural networks, a generator and a discriminator, working in tandem to generate realistic data. The generator creates new data samples, while the discriminator evaluates their authenticity, pushing the generator to improve over time. GANs have revolutionized tasks like image synthesis, style transfer, and data augmentation, creating realistic images, videos, and even audio from scratch. Diffusion models generate data through an iterative denoising process, progressively refining random noise into structured outputs, and have proven highly effective for realistic degradation modeling. Vision transformers (ViTs) treat images as sequences of patches, using self-attention mechanisms to capture global dependencies, offering a powerful alternative to CNNs for degradation analysis and generation. Both architectures exemplify the growing capabilities of Al in solving complex problems across industries.

In one example embodiment, the Realistic Face Transfer (RFT) Module 216 is an advanced machine learning model designed to transfer facial characteristics and features from one image to another while maintaining the realism and natural appearance of the transferred face. The RFT module 216 primarily focuses on enabling the seamless integration of face images under varying conditions, such as different poses, lighting, or background environments, without compromising the authenticity of the transferred face.

This RFT module 216 leverages advanced deep learning techniques, including generative models and face alignment algorithms, to ensure that the facial features in the source image are effectively mapped and transferred to the target image. The core functionality of the RFT module 216 involves the identification and extraction of key facial landmarks from both the source and target images, such as the eyes, nose, mouth, and facial contours. Once these landmarks are aligned, the module uses techniques like image warping or deep neural networks to transfer the facial features from the source to the target image. During this process, the RFT module 216 preserves important facial characteristics, such as skin tone, texture, and expression, ensuring that the transferred face appears natural and cohesive in its new environment. While other systems may achieve natural-looking results, the inventiveness of the present invention lies in the RFT module's unique ability to produce correct facial transfers-preserving anatomical accuracy and lifelike fidelity where others fail. This precision is important for applications requiring photorealistic integrity. Additionally, the RFT module 216 accounts for various factors such as lighting conditions and pose differences to prevent distortions or unnatural artifacts.

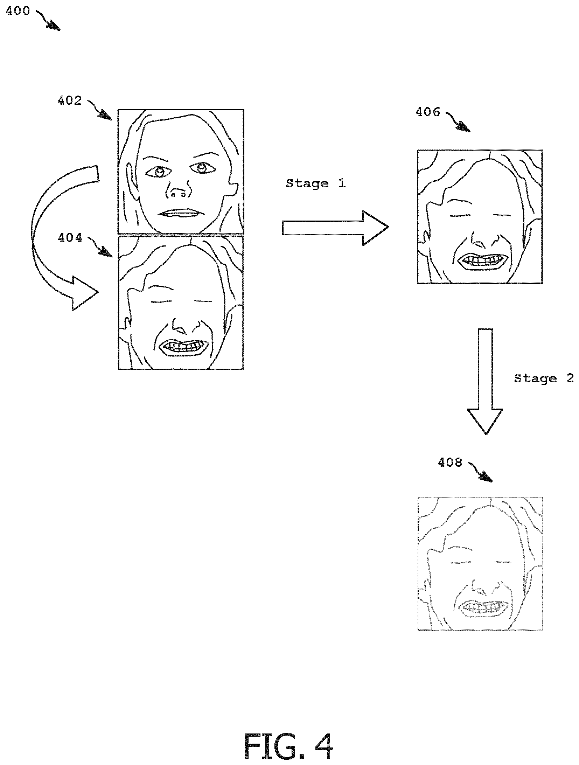

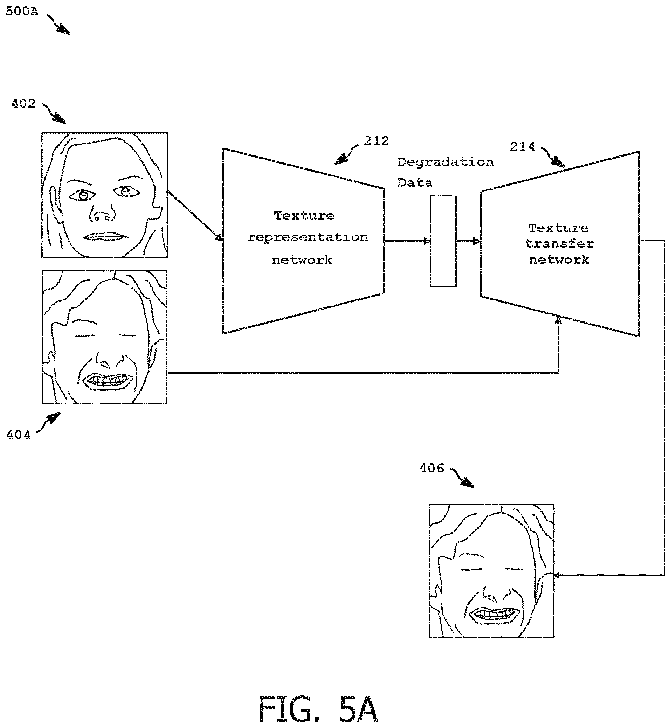

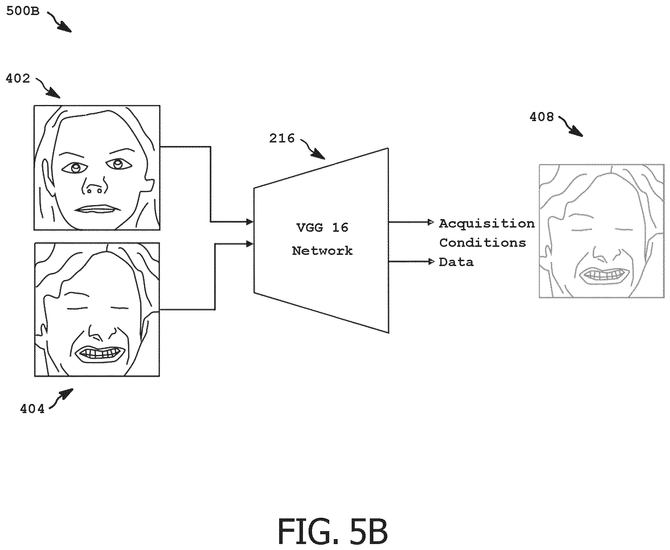

FIGs. 4 to 5B illustrates different modules enabling the process of simulating realistic degraded images, in accordance with an example embodiment. The process 400 begins with the input of a degraded image 402, which has an unknown realistic degradation and is captured using an unknown sensor and under unknown conditions. In the first stage, as shown in FIG. 5A, the FQE module 212 of the system 102 first creates an enhanced version 406 of the input image 402. Using the pairs of the degraded image 402 and the enhanced image 406, the DRLM generates a numerical degradation vector data that encodes information related to the degradation. This degradation vector is then used in conjunction with a high-quality target image 404 to be simulated for the degradation process. In the second stage, as shown in FIG. 5B, the RFT module 216 transfers the image acquisition condition information from the degraded image 402 to the image 406 obtained in the first stage. This two-stage process transfers both the degradation information and the acquisition condition information to generate the final simulated realistic degraded image 408 of the high-quality target image 404.

The DRLM 214 learns a representation that encodes the degradation data independently of the content of the degraded image 402, enabling the generation of images 408 with the same degradation encoded in the degradation vector. However, this representation only encodes the texture information and does not capture the acquisition conditions. To address this, the RFT module 216 is employed which enables transfer data related to the acquisition conditions, such as luminance and color, ensuring a more accurate and realistic result in form of image 408.

In one example embodiment, the input degraded image 402 and the high-quality target image 404 to be simulated into a realistic degraded image can be entered into the system 102 using the input device 104. The users may capture and/or enter the corresponding images into the system 102 using the input device 104 upon validation by the system 102. In one example, as illustrated, the input degraded image 402 can correspond to an image of a face associated with one or more entities/users, which may be captured under unknown degradation factors and acquisition conditions.

The present disclosure introduces a system and method for generating realistic degraded images by offering a fully automated solution for simulating real-world image degradation and capture conditions. By simply providing a real-degraded image and a high-quality (HQ) image, the system generates a synthetic degraded version of the HQ image as though it were captured under the same conditions as the original degraded image. This approach eliminates the need to search for the same camera used in the original capture, even if it is an outdated or obsolete model, streamlining the process and reducing resource dependency.

Additionally, the system removes the requirement for expert intervention to manually identify specific image degradations, making the process more efficient and accessible. This automated approach not only saves time and financial costs but also ensures the consistency and accuracy of the generated degraded images, without the complexities of traditional methods. The ability to simulate realistic degradation in a controlled manner simplifies the workflow and makes it suitable for a wide range of applications.

One of the key advantages of this solution lies in its application to face recognition systems. By generating realistic degraded images, the system can augment training data for various face recognition algorithms, including detection and feature extraction. Simulating diverse real-world degradations and capture conditions ensures that these algorithms are exposed to a broad spectrum of data, thereby improving their robustness and accuracy. This makes the solution an invaluable tool for enhancing face recognition technology and other similar applications.

Thus, the present disclosure provides a more efficient, cost-effective, and reliable way to simulate degraded images. Its ability to automate the process of generating synthetic degraded images opens up new possibilities for improving machine learning algorithms, particularly in face recognition, and contributes to the development of more effective and robust systems across various fields.

## Claims

1. **A system** (102) for simulating realistic degraded images, the system (102) comprising:
• one or more processors (202) coupled with at least one memory (204), wherein said at least one memory (204) stores instructions which when executed by the one or more processors (202) cause the system (102) to:
o receive an input degraded image and a high-quality target image to be simulated into a realistic degraded image;
∘ create, using a first learning module (212), an enhanced version of the received input degraded image;
∘ analyze, using a second learning module (214), the enhanced version of the degraded image and the input degraded image to generate a degradation vector, wherein the degradation vector pertains to one or more degradation characteristics associated with the input degraded image, and encompasses an overall degradation in the input degraded image;
∘ extract, using a third learning module (216), an acquisition condition associated with the input degraded image; and
∘ generate the simulated realistic degraded image of the high-quality target image based on the generated degradation vector and the extracted acquisition condition.

2. The system (102) according to claim 1, wherein the system (102) is configured to:
• apply the degradation vector to the target image to simulate degradation and correspondingly create a partially degraded image; and
• extract and transfer, using the third learning module (216), the extracted acquisition condition from the input degraded image to the partially degraded image to generate the simulated realistic degraded image of the high-quality target image.

3. The system (102) according to any of previous claims, wherein the input degraded image corresponds to an image of a face associated with one or more entities.

4. The system (102) according to any of previous claims, wherein the first learning module (212) is a face quality enhancement (FQE) module that is configured to enhance facial features of the input degraded image by suppressing noise and restoring clarity in the input degraded image to create the enhanced version of the input degraded image.

5. The system (102) according to any of previous claims, wherein the second learning module (214) is a degradation representation learning module (DRLM) that is configured to analyze the enhanced version of the degraded image and the input degraded image to generate the degradation vector that encode the one or more degradation characteristics of the input degraded image.

6. The system (102) according to any of previous claims, wherein the DRLM is configured to generate the degradation vector independent of content associated with the input degraded image.

7. The system (102) according to any of previous claims, wherein the third learning module (216) is a realistic face transfer (RFT) module that is configured to transfer the extracted acquisition condition from the input degraded image to the partially degraded image.

8. The system (102) according to any of previous claims, wherein the one or more degradation characteristics comprises one or more of: noise pattern, blur, motion blur, textural inconsistencies, occlusions, distortions, resolution changes, illumination variations, color shifts, and contrast issues.

9. The system (102) according to any of previous claims, wherein the acquisition condition comprises one or more of: lighting condition, exposure settings, camera sensor type, camera angle, focal length, depth of field, white balance settings, aperture settings, shutter speed, iso sensitivity, and environmental factors such as shadows, reflections, fog, rain, or glare.

10. A method (300) for simulating realistic degraded images, the method (300) comprising:
• receiving (302), by a system (102), an input degraded image and a high-quality target image to be simulated into a realistic degraded image;
• creating (304), by the system (102), using a first learning module (212), an enhanced version of the received input degraded image;
• analysing (306), by the system (102), using a second learning module (214), the enhanced version of the degraded image and the input degraded image to generate degradation vector, wherein the degradation vector pertains to one or more degradation characteristics associated with the input degraded image;
• extracting (308), by the system (102), using a third learning module (216), an acquisition condition associated with the input degraded image; and
• generating (310), by the system (102), the simulated realistic degraded image of the high-quality target image based on the generated degradation vector and the extracted acquisition condition.

11. The method (300) according to claim 10, wherein the method (300) comprises the steps of:
• applying the degradation vector to the target image to simulate degradation and correspondingly create a partially degraded image; and
• extracting and transferring, using the third learning module (216), the extracted acquisition condition from the input degraded image to the partially degraded image for generating the simulated realistic degraded image of the high-quality target image.

12. The method (300) according to any of claims 10 or 11, wherein the first learning module (212) is a face quality enhancement (FQE) module, wherein the method (300) comprises the steps of enhancing, by the FQE module, facial features of the input degraded image by suppressing noise and restoring clarity in the input degraded image to create the enhanced version of the input degraded image.

13. The method (300) according to any of claims 10 to 12, wherein the second learning module (214) is a degradation representation learning module (DRLM), wherein the method (300) comprises the steps of analyzing, by the DRLM, the enhanced version of the degraded image and the input degraded image to generate the vector that encode the one or more degradation characteristics of the input degraded image.

14. The method (300) according to any of claims 10 to 13, wherein the method (300) comprises the steps of generating the degradation vector independent of content associated with the input degraded image.

15. The method (300) according to any of claims 10 to 14, wherein the third learning module (216) is a realistic face transfer (RFT) module, wherein the method (300) comprises the steps of transferring, by the RFT module, the extracted acquisition condition from the input degraded image to the partially degraded image.
